(19) **Europäisches Patentamt**
**European Patent Office**
**Office européen des brevets**

(11) **EP 3 847 424 B1**

(12) **FASCICULE DE BREVET EUROPEEN**

(45) Date de publication et mention
de la délivrance du brevet:
**12.07.2023 Bulletin 2023/28**

(21) Numéro de dépôt: **19744765.9**

(22) Date de dépôt: **24.06.2019**

(51) Classification Internationale des Brevets (IPC):
**G01F 22/00** *(2006.01)* **G01F 17/00** *(2006.01)*
**G01F 13/00** *(2006.01)* **B65D 88/78** *(2006.01)*

(52) Classification Coopérative des Brevets (CPC):
**G01F 22/00; G01F 13/00; G01F 17/00**

(86) Numéro de dépôt international:
**PCT/FR2019/051543**

(87) Numéro de publication internationale:
**WO 2020/049232 (12.03.2020 Gazette 2020/11)**

(54) **PROCÉDÉ ET DISPOSITIF DE DÉTERMINATION DU VOLUME DE LIQUIDE RESTANT A L'INTÉRIEUR D'UNE POCHE SOUPLE DE DISTRIBUTION DE LIQUIDE**

VERFAHREN UND VORRICHTUNG ZUR BESTIMMUNG DES FLÜSSIGKEITSRESTMENGE IN EINEM FLEXIBLEN FLÜSSIGKEITSSPENDERBEUTEL

METHOD AND DEVICE FOR DETERMINING THE VOLUME OF LIQUID REMAINING INSIDE A FLEXIBLE LIQUID-DISPENSING POUCH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.09.2018 FR 1858050**

(43) Date de publication de la demande:
**14.07.2021 Bulletin 2021/28**

(73) Titulaire: **SAIPEM S.A.**
**78180 Montigny Le Bretonneux (FR)**

(72) Inventeur: **DELAPLACE, Thomas**
**92110 Clichy (FR)**

(74) Mandataire: **Cabinet Beau de Loménie**
**158, rue de l'Université**
**75340 Paris Cedex 07 (FR)**

(56) Documents cités:
**WO-A1-2015/110413      WO-A1-2016/179371**
**WO-A2-2016/207359      US-A1- 2018 072 494**
**US-B1- 9 470 365**

## Description

Arrière-plan de l'invention

La présente invention se rapporte au domaine général de la détermination du volume de liquide restant à l'intérieur d'une poche souple de distribution de liquide, notamment de produits chimiques utilisés dans le traitement sous-marin d'eau de mer, en particulier en liaison avec l'exploitation de puits de production d'hydrocarbures.

Dans la production sous-marine à grande profondeur d'hydrocarbures, notamment de prétrole et de gaz, de l'eau de mer est typiquement injectée dans les puits pour compenser la perte de pression dans le réservoir liée à la production et augmenter la récupération d'hydrocarbures.

L'eau de mer qui est injectée dans les puits doit être préalablement traitée pour, d'une part éliminer les matières en suspension dans l'eau, en particulier les matières organiques, et d'autre part pour désulfater l'eau de mer, c'est-à-dire enlever les ions sulfates afin d'éviter la formation de dépôts en cas de présence de baryum en particulier dans les gisements. En effet, les ions sulfate forment avec les ions baryum ou d'autres ions présents dans la formation des dépôts minéraux préjudiciables à une bonne extraction des hydrocarbures.

Classiquement, le traitement de l'eau de mer est réalisé par une ou plusieurs unités de traitement, appelée SRU (pour « *Sulphate Removal Unit* » en anglais), qui sont installées en surface, notamment sur une unité flottante de production, de stockage et de déchargement appelée FPSO (pour *« Fioating Production Storage and Offloading »* en anglais). L'unité de traitement de l'eau intègre différents modules, notamment un système de nanofiltration membranaire qui assure l'élimination des sulfates, et en amont de celui-ci, un système de préfiltration.

La réduction des coûts de développement des gisements isolés et éloignés des centres de production existants, a toutefois rendu nécessaire le développement d'unités sous-marines de traitement de l'eau de mer aptes à fonctionner sous l'eau. En effet, le traitement local de l'eau de mer, au plus près des puits d'injection, permet de supprimer la conduite nécessaire à la remontée de l'eau de mer vers l'unité de traitement sur le FPSO, l'unité de traitement sur le FPSO elle-même, ainsi que le réseau d'injection depuis le FPSO jusqu'aux têtes de puits.

Or, le milieu marin contient des micro-organismes spécifiques qui ont tendance à s'accrocher et à se développer sur certaines surfaces, et plus particulièrement à venir encrasser rapidement les membranes de filtration, que ce soit sur les systèmes de surface ou les stations sous-marines.

Pour limiter voire supprimer le colmatage des membranes de filtration des unités de surface ou sous-marines de traitement de l'eau, il est connu de procéder à leur traitement de désinfection de manière régulière. A cet effet, on ajoute un biocide et/ou d'autres produits chimiques (agents anti-tartre par exemple) à l'eau qui doit être traitée et de cette manière, les produits chimiques arrivent jusqu'aux différents équipements à traiter en particulier les membranes de filtration. Cela permet d'augmenter la durée de vie des membranes et de réduire la fréquence de leur remplacement.

Dans le cas d'une station sous-marine, ces produits chimiques peuvent être typiquement stockés sous forme d'un liquide placé dans une poche souple, ce qui permet de le mettre en équipression avec l'eau de mer environnante. La poche souple étant relativement fragile, pour éviter tout risque de fuite, il peut être prévu de placer la poche souple à l'intérieur d'une enveloppe rigide. Ainsi, lorsque le produit chimique est consommé, la poche souple contenant le liquide se vide et son volume diminue. De l'eau de mer (qui entourait le module) peut alors pénétrer à l'intérieur de l'enveloppe rigide (dans le volume entourant la poche souple) pour compenser la perte de volume et maintenir l'équi-pression entre le liquide restant dans la poche souple et la pression hydrostatique de l'eau de mer environnante. L'eau de mer autour de l'enveloppe rigide, l'eau à l'intérieur de l'enveloppe rigide et entourant la poche souple et le liquide dans la poche souple se trouvent ainsi à la même pression. On pourra se référer à la publication WO 2016/179371 qui décrit un exemple de mise en oeuvre d'une telle solution de stockage.

L'une des problèmatiques liée à l'utilisation d'une poche souple pour le stockage et la distribution des produits chimiques est la surveillance et la mesure du niveau (i.e. volume) restant dans la poche. En effet, habituellement de telles poches sont utilisées en surface ou dans des endroits où un contrôle visuel du niveau restant est aisé. Or, ce contrôle visuel n'est pas possible dans une application sous-marine incluant une enveloppe rigide. Une autre solution de surveillance consiste à effectuer une mesure du débit de liquide sortant de la poche souple pour déterminer le niveau restant. Cependant, en cas de perte de cette information et de son suivi, il n'est plus possible de connaître le volume de liquide restant à l'intérieur de la poche souple.

Il est à noter que de tels systèmes de stockage sous-marins de produits chimiques liquides peuvent être appliqués dans d'autre cas que les stations de traitement d'eau sous-marin. Par exemple, ce genre de stockage peut également être utilisé pour stocker des produits à injecter directement dans les puits, des produits à ajouter aux effluents produits (huile, gaz, eau) et envoyer vers les plateformes pétrolières ou vers la côte, comme des inhibiteurs d'hydrate par exemple, ou encore pour des application de « commissioning » (i.e. mise en service) de pipeline.

Objet et résumé de l'invention

La présente invention a donc pour but principal de pallier de tels inconvénients en proposant de déterminer de façon simple et fiable le volume de liquide restant à l'intérieur de la poche souple.

Conformément à l'invention, ce but est atteint grâce à un procédé de détermination du volume de liquide restant $V_r$ à l'intérieur d'une poche souple initialement remplie par un volume $V_i$ connu d'un liquide à consommer et munie de moyens pour distribuer du liquide à consommer, le procédé comprenant :

le placement de la poche souple à l'intérieur d'une enveloppe rigide initialement remplie d'un volume $V_1$ connu d'un premier liquide de mesure ayant une conductivité électrique $C_1$;
au cours de la distribution d'un volume $V_A$ de liquide à consommer, l'admission à l'intérieur de l'enveloppe rigide d'un même volume $V_A$ d'un second liquide de mesure présent à l'extérieur de l'enveloppe rigide pour compenser la perte de volume due à la distribution du volume $V_A$ de liquide à consommer et maintenir l'equipression de l'ensemble, le second liquide de mesure ayant une conductivité électrique $C_2$ différente de la conductivité électrique $C_1$ du premier liquide de mesure ;
la mesure de la conductivité électrique $C_M$ du mélange des premier et second liquides de mesure présents à l'intérieur de l'enveloppe rigide ;
la détermination du volume $V_A$ de liquide à consommer qui a été distribué à partir de la mesure de la conductivité électrique $C_M$; et
le calcul du volume $V_r$ de liquide à consommer restant à l'intérieur de la poche à partir des volumes $V_i$ et $V_A$.

Le procédé selon l'invention est remarquable en ce qu'il utilise de simples mesures de conductivité électrique du mélange des premier et second liquides de mesure présents à l'intérieur de l'enveloppe rigide pour permettre de déterminer le volume de liquide restant dans la poche souple. Ainsi, l'invention permet de manière simple et pérenne de connaître en permanence le volume de liquide restant dans la poche souple.

Par ailleurs, dans le cadre d'une application au stockage et distribution de produits chimiques associés au traitement sous-marin d'eau de mer, le procédé selon l'invention ne nécessite aucun contrôle visuel direct de la porche souple pour connaître ce niveau.

Dans le cas d'application au stockage et distribution de produits chimiques associés au traitement sous-marin d'eau de mer, de préférence, le premier liquide de mesure est de l'eau douce et le second liquide de mesure est de l'eau de mer. Le choix de ces liquides est particulièrement avantageux. En effet, l'eau de mer est présente dans l'environnement direct de l'unité sous-marine de traitement. De plus, la mesure de la conductivité de l'eau de mer, de l'eau douce ou d'un mélange eau douce/eau de mer permet d'obtenir leur densité respective .

Dans ce cas, le volume $V_A$ de liquide à consommer qui a été distribué est avantageusement déterminé à partir de l'équation suivante :

$$V_A = V_1 \times [(\rho_M - \rho_1)/(\rho_2 - \rho_M)]$$

dans laquelle : $\rho_M$ est la densité du mélange de l'eau de mer et de l'eau douce présents à l'intérieur de l'enveloppe rigide ; $\rho_1$ est la densité de l'eau douce ; et $\rho_2$ est la densité de l'eau de mer. Les deux liquides (eau de mer et eau douce) sont chimiquement compatibles, ce qui implique de très faibles réactions chimiques entre les deux, et donc une simplification pour passer de la conductivité du mélange à sa salinité puis à sa densité à l'aide de l'équation d'état de l'eau de mer.

De façon avantageuse, la densité $\rho_M$ du mélange de l'eau de mer et de l'eau douce présents à l'intérieur de l'enveloppe rigide est calculée à partir de la mesure de la conductivité électrique $C_M$ dudit mélange, de sa température et de sa pression.

Selon un autre mode de détermination, le volume $V_r$ de liquide restant est déterminé à partir d'une courbe de référence préétablie donnant la conductivité électrique $C_M$ en fonction du volume du second liquide de mesure ajouté au volume $V_1$ connu du premier liquide de mesure. Cet autre mode de détermination présente l'avantage d'être simple de mise en oeuvre mais peut être rendu compliqué par l'influence de la température et/ou de la pression ou encore des réactions chimiques entre les deux liquides.

De façon avantageuse, le mélange des premier et second liquides de mesure présents à l'intérieur de l'enveloppe rigide est homogénéisé préalablement à la mesure de sa conductivité électrique $C_M$. L'homogénéisation du mélange des deux liquides présente l'avantage d'améliorer la détermination du volume restant par la mesure de sa conductivité.

Dans ce cas, l'homogénéisation du mélange des premier et second liquides de mesure présents à l'intérieur de l'enveloppe rigide peut être obtenue par agitation mécanique, par convection thermique, par vibration ou par recirculation.

L'invention a également pour objet lapplication du procédé tel que défini précédemment au stockage et à l'injection sous-marine de produits chimiques.

L'invention a encore pour objet un dispositif de détermination du volume de liquide restant $V_r$ à l'intérieur d'une poche souple placée à l'intérieur d'une enveloppe rigide, comprenant :

une poche souple destinée à être remplie par un volume initial $V_i$ connu d'un liquide à consommer, ladite poche souple étant munie de moyens pour distribuer du liquide à consommer ;
une enveloppe rigide à l'intérieur de laquelle est placée la poche souple et qui est destinée à être initialement remplie d'un volume $V_1$ connu d'un premier liquide de mesure ayant une conductivité électrique

$C_1$ ;
des moyens d'admission à l'intérieur de l'enveloppe rigide d'un volume $V_A$ d'un second liquide de mesure présent à l'extérieur de l'enveloppe rigide pour compenser la perte de volume due à la distribution d'un même volume $V_A$ de liquide à consommer et maintenir l'equipression de l'ensemble, le second liquide de mesure ayant une conductivité électrique $C_2$ différente de la conductivité électrique $C_1$ du premier liquide de mesure ;
un capteur de conductivité électrique positionné à l'intérieur de l'enveloppe rigide pour mesurer la conductivité électrique $C_M$ du mélange des premier et second liquides de mesure présents à l'intérieur de l'enveloppe rigide ; et
des moyens de calcul pour déterminer, à partir de la mesure de la conductivité électrique $C_M$, le volume $V_A$ de liquide à consommer qui a été distribué et, à partir des volumes $V_i$ et $V_A$, le volume $V_r$ de liquide à consommer restant à l'intérieur de la poche.

De préférence, l'enveloppe rigide comprend un clapet anti-retour pour l'admission du volume $V_A$ du second liquide de mesure présent à l'extérieur de l'enveloppe. La présence de ce clapet anti-retour permet d'éviter que le mélange ne sorte de l'enveloppe.

Selon un mode de réalisation, l'enveloppe rigide comprend une membrane souple qui délimite à l'intérieur de l'enveloppe rigide la poche souple destinée à être remplie par le liquide à consommer.

Le dispositif peut comprendre en outre un capteur de température et un capteur de pression à l'intérieur de l'enveloppe rigide, et un capteur de température et un capteur de pression à l'extérieur de l'enveloppe rigide afin de calculer de manière plus précise les densités respectives $\rho_1$, $\rho_2$, $\rho_M$ du premier liquide de mesure, du second liquide de mesure et du mélange des premier et second liquides de mesure présents à l'intérieur de l'enveloppe rigide.

De préférence également, le dispositif comprend en outre des moyens d'homogénéisation du mélange des premier et second liquides de mesure présents à l'intérieur de l'enveloppe rigide.

Ces moyens d'homogénéisation peuvent comprendre un agitateur mécanique, une source de chaleur pour créer une convection thermique, une source de vibration ou une pompe de recirculation du mélange.

Les moyens d'admission à l'intérieur de l'enveloppe rigide du volume $V_A$ d'un second liquide de mesure peuvent comprendre une pluralité d'orifices d'admission répartis à différents endroits de l'enveloppe rigide pour faciliter l'homogénéisation du mélange.

Le dispositif peut comprendre en outre une pluralité de capteurs de conductivité électrique positionnés à différents endroits à l'intérieur de l'enveloppe rigide pour vérifier l'homogénéité du mélange des premier et second liquides de mesure présents à l'intérieur de l'enveloppe rigide.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- les figures 1A et 1B sont des vues schématiques illustrant un exemple de mise en oeuvre du procédé selon l'invention ;
- les figures 2A et 2B sont des vues schématiques illustrant une variante de mise en oeuvre du procédé selon l'invention ;
- la figure 3 est une autre vue schématique illustrant une autre variante de mise en oeuvre du procédé selon l'invention ; et
- la figure 4 est un ordinogramme montrant différentes étapes de la mise en oeuvre du procédé illustré par la figure 3.

Description détaillée de l'invention

L'invention s'applique à la détermination du volume de tout liquide restant $V_r$ à l'intérieur d'une poche souple initialement remplie par un volume $V_i$ connu d'un liquide.

L'invention trouve une application particulière - mais non limitative - dans la détermination du volume de produits chimiques contenus sous forme liquide dans une poche souple, ces produits chimiques étant destinés à être mélangés à de l'eau de lavage utilisée pour nettoyer des membranes de filtration d'une unité sous-marine de traitement de l'eau.

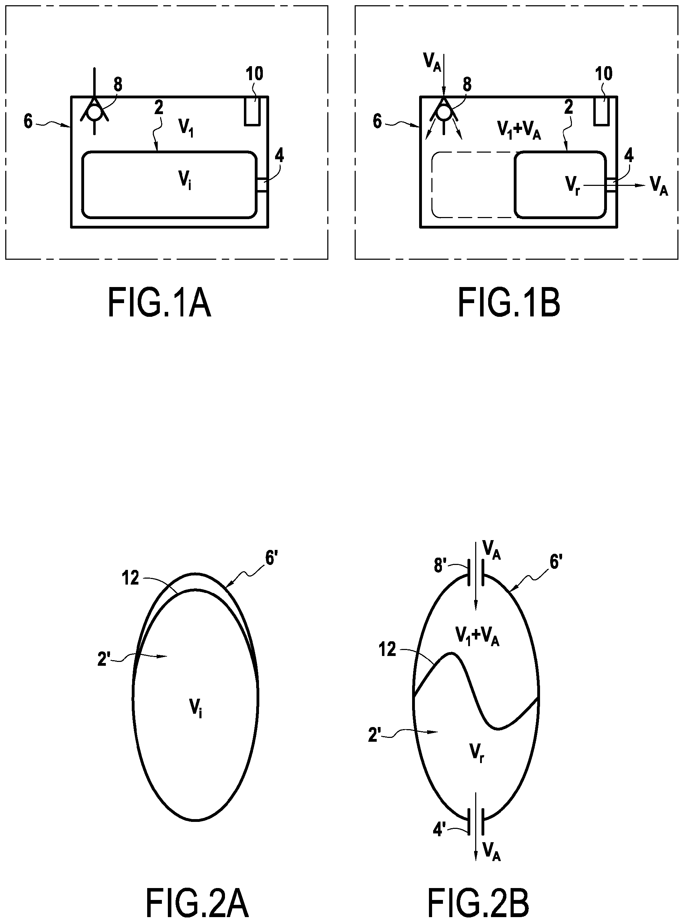

Les figures 1A et 1B illustrent de façon schématique un exemple de mise en oeuvre d'un procédé selon l'invention pour la détermination du volume de liquide restant $V_r$ à l'intérieur d'une poche souple 2 initialement remplie par un volume $V_i$ connu d'un liquide à consommer.

La poche souple 2 comprend des moyens de distribution 4 du liquide à consommer, par exemple un biocide, un anti-tartre, un inhibiteur d'hydrate, etc., et elle est placée à l'intérieur d'une enveloppe rigide 6. Comme représenté sur la figure 1A, cette dernière est initialement remplie d'un volume $V_1$ connu d'un premier liquide de mesure ayant une conductivité électrique $C_1$.

Par ailleurs, l'enveloppe rigide 6 comprend des moyens d'admission d'un second liquide de mesure présent à l'extérieur de l'enveloppe rigide 6, ce second liquide de mesure ayant une conductivité électrique $C_2$ différente de la conductivité électrique $C_1$ du premier liquide de mesure. Par exemple, ces moyens d'admission se présenteront sous la forme d'un clapet anti-retour 8.

Le procédé de détermination selon l'invention se base sur le principe que, au cours de la distribution d'un volume $V_A$ de liquide à consommer hors de la poche souple 2 et de l'enveloppe rigide 6, un même volume $V_A$

d'un second liquide de mesure présent à l'extérieur de l'enveloppe rigide est admis à l'intérieur de l'enveloppe rigide pour compenser la perte de pression due à la distribution du volume $V_A$ de liquide à consommer (figure 1B).

Le volume $V_A$ de second liquide de mesure qui est ainsi admis à l'intérieur de l'enveloppe rigide se mélange au volume $V_1$ du premier liquide de mesure de conductivité électrique $C_1$. Le mélange ($V_A + V_1$) des premier et second liquides de mesure présents à l'intérieur de l'enveloppe rigide présente alors une conductivité électrique $C_M$ qui est différente des conductivités électriques $C_1$, $C_2$ respectives des premier et second liquide de mesure. Cette conductivité électrique est mesurée au moyen d'un capteur de conductivité électrique 10 qui est positionné à l'intérieur de l'enveloppe rigide 6.

Si l'on connaît la conductivité électrique de n'importe quel mélange ($V_A + V_1$), ainsi que le volume initial $V_1$, il est possible, en mesurant la conductivité électrique $C_M$ dudit mélange, de déterminer le volume de liquide admis à l'intérieur de l'enveloppe rigide 6, et donc le volume $V_A$ de liquide à consommer qui a été distribué (différentes méthodes pour déterminer ce volume $V_A$ à partir de la mesure de conductivité électrique $C_M$ seront détaillées ci-après).

Il suffit alors de soustraire ce volume $V_A$ au volume initial $V_i$ présent à l'intérieur de la poche souple 2 pour obtenir le volume $V_r$ de liquide à consommer restant à l'intérieur de celle-ci.

On notera que ce procédé peut être appliqué à d'autres architectures de stockage du liquide à consommer.

Les figures 2A et 2B illustrent de façon schématique un autre exemple d'architecture dans laquelle l'enveloppe rigide 6' comprend une membrane souple 12 qui délimite à l'intérieur de l'enveloppe rigide la poche souple 2' destinée à recevoir le liquide à consommer.

En d'autres termes, l'intérieur de l'enveloppe rigide 6' est ici séparée en deux volumes par la membrane souple 12 qui se déforme au fur et à mesure de la consommation du liquide à consommer. Plus précisément, sur la figure 1A, la poche souple 2' est remplie d'un volume initial connu $V_i$ de liquide à consommer.

Lorsque ce liquide à consommer est distribué (par les moyens de distribution 4' - voir la figure 2B), le second liquide de mesure présent à l'extérieur de l'enveloppe rigide 6' est admis à l'intérieur de celle-ci (par exemple par un clapet anti-retour 8') pour compenser la perte de pression due à la distribution du volume $V_A$ de liquide à consommer.

On décrira à présent deux méthodes possibles pour déterminer, à partir de la mesure de la conductivité électrique $C_M$ du mélange ($V_A + V_1$), le volume $V_A$ de liquide à consommer qui a été distribué, et donc le volume $V_r$ de liquide restant à l'intérieur de la poche souple.

Une première méthode consiste à établir au préalable une courbe de référence donnant la conductivité électrique $C_M$ en fonction du volume $V_A$ du second liquide de mesure ajouté au volume initial $V_1$ du premier liquide de mesure.

A cet effet, en se basant sur un volume connu $V_1$ de liquide ayant une conductivité électrique connue $C_1$, on ajoute progressivement des volumes connus de liquide ayant une conductivité électrique connue $C_2$ différente de la conductivité électrique $C_1$ et l'on suit l'évolution de la conductivité électrique $C_M$ du mélange.

Ainsi, il est possible d'établir une courbe de référence valable pour le second liquide de mesure et pour un volume initial connu $V_1$ de premier liquide de mesure. Il est à noter que cette courbe de référence devra être établie dans des conditions permettant d'être sûr de sa représentativité en fonction de l'application choisie.

Lors de la mise en oeuvre du procédé, les mesures de conductivité électrique $C_M$ du mélange ($V_A + V_1$) des premier et second liquides de mesure présents à l'intérieur de l'enveloppe rigide sont comparées à cette courbe de référence pour en déduire le volume $V_A$ de second liquide de mesure ayant pénétré dans l'enveloppe rigide (et donc le volume $V_A$ de liquide à consommer qui a été distribué).

Il est à noter que cette méthode recourant à une courbe de référence peut être rendue compliquée par l'influence de la température et/ou de la pression, ou encore des réactions chimiques entre les premier et second liquides de mesure dans des milieux où ces paramètres ne sont pas maîtrisés.

Une seconde méthode consiste à utiliser la conductivité électrique $C_M$ mesurée afin de calculer un autre paramètre qui rend plus simple l'estimation du mélange ($V_A + V_1$) des premier et second liquides de mesure présents à l'intérieur de l'enveloppe rigide, comme la densité par exemple.

Cette seconde méthode est notamment particulièrement avantageuse si le premier liquide de mesure est de l'eau douce et le second liquide de mesure est de l'eau de mer. En effet, ces deux eaux sont chimiquement compatibles, ce qui implique de très faibles réactions chimiques entre les deux, et donc une simplification pour passer de la conductivité électrique du mélange à sa salinité, puis à sa densité à l'aide de l'équation d'état de l'eau de mer.

La densité $\rho_M$ du mélange eau de mer / eau douce présent dans l'enveloppe rigide permet ensuite de déterminer le volume d'eau de mer qui a pénétré à l'intérieur de l'enveloppe rigide en faisant un bilan de masse. La conductivité électrique initiale $C_1$ de l'eau douce, mesurée avec un capteur ou par un autre procédé permet de calculer sa densité.

On notera que l'utilisation de l'équation d'état de l'eau de mer pour déterminer la densité $\rho_M$ du mélange à partir de sa conductivité électrique nécessite de connaître également la température et la pression dudit mélange.

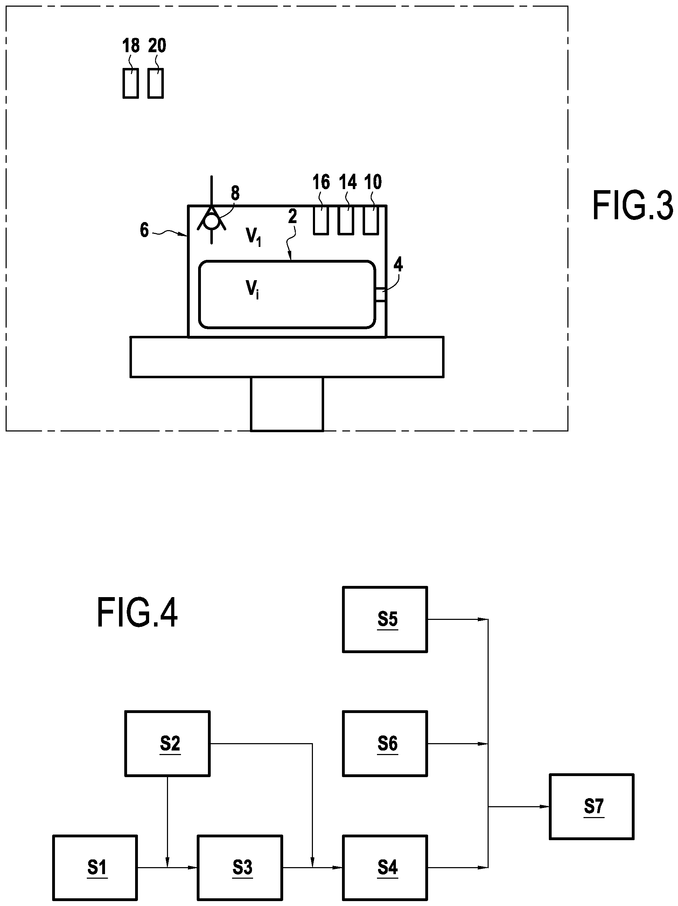

A cet effet, comme représenté sur la figure 3, le dispositif comprend en outre un capteur de température 14 et un capteur de pression 16 à l'intérieur de l'enveloppe rigide 6 pour mesurer respectivement la température $T_M$ et la pression $\rho_M$ du mélange $(V_A + V_1)$ eau de mer / eau douce présent dans l'enveloppe rigide, ainsi qu'un capteur de température 18 et un capteur de pression 20 à l'extérieur de l'enveloppe rigide pour connaître respectivement la température $T_2$ et la pression $P_2$ de l'eau de mer présente à l'extérieur de l'enveloppe rigide (ces capteurs 18, 20 peuvent être positionnés sur le module, sur un autre module ou ailleurs).

Ces capteurs permettent de déterminer de manière très précise la salinité et la densité correspondant aux conditions mesurées de pression et température. Des hypothèses sur la pression et la température peuvent également être prises pour se passer de ces capteurs, si par exemple la pression et la température ne varient pas dans le temps ou de manière saisonière ce qui peut être le cas dans un stockage de grande profondeur par exemple, mais le calcul de la salinité puis de la densité aura un degré d'incertitude un peu plus grand. Le volume restant sera donc calculé de manière moins précise.

La figure 4 est un ordinogramme montrant la façon dont ces différentes mesures sont combinées pour permettre de déterminer la densité du mélange $(V_A + V_1)$ eau de mer / eau douce présent dans l'enveloppe rigide, puis le volume $V_A$ d'eau de mer ayant été admis dans l'enveloppe rigide.

A partir des mesures de la conductivité électrique $C_M$ (étape S1) de la température $T_M$ et la pression $P_M$ (étape S2) du mélange $(V_A + V_1)$, il est possible, à partir de l'équation d'état de l'eau de mer, de calculer la salinité $S_M$ du mélange eau de mer / eau douce présent dans l'enveloppe rigide (étape S3), puis la densité $\rho_M$ de ce même mélange (étape S4).

On notera que l'équation d'état de l'eau de mer permet d'établir les courbes de salinité et de densité en fonction de la conductivité mesurée aux conditions de pression et de température locales. En effet, les liens entre conductivité électrique et salinité, puis entre salinité et densité sont décrits par l'équation d'état de l'eau de mer. Des algorithmes basés sur cette équation sont utilisés pour déterminer, à partir de la conductivité électrique, la salinité puis la densité. De tels algorithmes sont notamment décrits dans l'article intitulé « Algorithms for computation of fundamental properties of seawater », Unesco technical papers in marine science 44 publié en 1983.

Enfin, en partant des mesures de la densité $\rho_1$ de l'eau douce (étape S5) et de la densité $\rho_2$ de l'eau de mer (étape S6), on calcule au cours de l'étape S7 le volume $V_A$ de l'eau de mer admis dans l'enveloppe rigide (et donc le même volume $V_A$ de liquide à consommer qui a été distribué) au moyen de l'équation suivante :

$$V_A = V_1 \times \left[ (\rho_M - \rho_1)/(\rho_2 - \rho_M) \right]$$

Le volume de liquide restant $V_r$ à l'intérieur de la poche souple est alors simplement obtenu en soustrayant le volume $V_A$ de liquide à consommer qui a été distribué au volume connu $V_i$ initialement contenu dans la poche souple.

Cette seconde méthode pour déterminer le volume de liquide restant $V_r$ à l'intérieur de la poche souple est particulièrement avantageuse pour une application au stockage sous-marin et à la distribution de produits chimiques destinés à être mélangés à de l'eau utilisée pour nettoyer des membranes de filtration d'une unité sous-marine de traitement de l'eau.

A cet effet, lors de l'installation du système de stockage sous-marin, et après que la poche souple 2 ait été remplie d'un volume connu $V_i$ de produit chimique, l'enveloppe rigide 6 est préalablement remplie d'eau douce (ou en tout cas d'eau nettement moins salée que l'eau de mer). L'enveloppe étant rigide, le volume initial $V_1$ d'eau douce est connu. L'ensemble est alors placé sous l'eau à une certaine température $T_2$ et à une certaine pression $P_2$ de l'eau de mer environnante.

Lorsque la distribution de produit chimique commence, la poche souple 2 se vide d'un volume $V_A$ et le même volume $V_A$ d'eau de mer pénètre à l'intérieur de l'enveloppe rigide 6, augmentant petit à petit la salinité du mélange eau de mer / eau douce présent dans l'enveloppe rigide, et donc sa conductivité électrique $C_M$. Cette conductivité électrique est mesurée en permanence au moyen du capteur de conductivité 10 et, à l'aide des mesures de la température $T_M$ et de la pression $P_M$ dudit mélange, la densité $\rho_M$ du mélange est calculée.

Cette densité $\rho_M$ du mélange permet d'obtenir à tout instant le volume $V_A$ d'eau de mer ayant pénétré à l'intérieur de l'enveloppe rigide 6, et donc par extension, au volume $V_A$ de produit chimique consommé et au volume $V_r$ restant à l'intérieur de la poche souple.

On notera que le volume initial $V_1$ d'eau douce doit être adapté en fonction du volume initial $V_i$ de produit chimique présent dans la poche souple, mais aussi en fonction de salinités de l'eau douce et de l'eau de mer utilisées. En effet, si le volume initial d'eau douce est trop faible par exemple, la variation de salinité du mélange risque de rapidement devenir trop faible pour pouvoir déterminer avec précision le volume $V_A$ d'eau de mer ayant pénétré à l'intérieur de l'enveloppe rigide.

On notera également que la détermination du volume de liquide restant $V_r$ à l'intérieur de la poche souple par la mesure de la conductivité électrique $C_M$ du mélange présent dans l'enveloppe rigide est dépendante de la bonne homogénéité dudit mélange. Dans le cas de l'eau douce et de l'eau de mer comme premier et second liquides de mesure, les ions vont naturellement migrer pour homogénéiser le mélange mais ce phénomène peut être très long.

Aussi, pour améliorer l'homogénéisation du mélange entre les premier et second liquides de mesure, différentes solutions peuvent être prévues. Selon l'une de ces solutions, on pourra multiplier les points d'entrée du second liquide de mesure à l'intérieur de l'enveloppe rigide et les placer à différents endroits en fonction de l'architecture finale de l'ensemble. Selon une autre solution, on pourra prévoir un agitateur mécanique à l'intérieur de l'enveloppe rigide (par exemple en utilisant l'arbre de la pompe d'injection de produit chimique), ou une source de chaleur pour créer de la convection thermique, ou une source de vibration qui affecte le mélange, ou une pompe dédiée pour alimenter un circuit de recirculation du mélange, etc.

De plus, plusieurs capteurs de conductivité pourraient être prévus à l'intérieur de l'enveloppe rigide pour vérifier l'homogénéité du mélange entre les premier et second liquides de mesure en les plaçant judicieusement (en haut et en bas du volume par exemple pour parer à la différence de densité entre l'eau de mer et l'eau douce).

**Revendications**

1. Procédé de détermination du volume de liquide restant $V_r$ à l'intérieur d'une poche souple (2) initialement remplie par un volume $V_i$ connu d'un liquide à consommer et munie de moyens pour distribuer du liquide à consommer, le procédé comprenant :

    le placement de la poche souple à l'intérieur d'une enveloppe rigide (6) initialement remplie d'un volume $V_1$ connu d'un premier liquide de mesure ayant une conductivité électrique $C_1$; et au cours de la distribution d'un volume $V_A$ de liquide à consommer, l'admission à l'intérieur de l'enveloppe rigide d'un même volume $V_A$ d'un second liquide de mesure présent à l'extérieur de l'enveloppe rigide pour compenser la perte de volume due à la distribution du volume $V_A$ de liquide à consommer et maintenir l'equipression de l'ensemble, le second liquide de mesure ayant une conductivité électrique $C_2$ différente de la conductivité électrique $C_1$ du premier liquide de mesure ;
    **caractérisé en ce qu'**il comprend en outre la mesure de la conductivité électrique $C_M$ du mélange des premier et second liquides de mesure présents à l'intérieur de l'enveloppe rigide ;
    la détermination du volume $V_A$ de liquide à consommer qui a été distribué à partir de la mesure de la conductivité électrique $C_M$ ; et
    le calcul du volume $V_r$ de liquide à consommer restant à l'intérieur de la poche à partir des volumes $V_i$ et $V_A$.

2. Procédé selon la revendication 1, dans lequel le premier liquide de mesure est de l'eau douce et le second liquide de mesure est de l'eau de mer.

3. Procédé selon la revendication 2, dans lequel le volume $V_A$ de liquide à consommer qui a été distribué est déterminé à partir de l'équation suivante :

$$V_A = V_1 \times [(\rho_M - \rho_1)/(\rho_2 - \rho_M)]$$

dans laquelle : $\rho_M$ est la densité du mélange de l'eau de mer et de l'eau douce présents à l'intérieur de l'enveloppe rigide ; $\rho_1$ est la densité de l'eau douce ; et $\rho_2$ est la densité de l'eau de mer.

4. Procédé selon la revendication 3, dans lequel la densité $\rho_M$ du mélange de l'eau de mer et de l'eau douce présents à l'intérieur de l'enveloppe rigide est calculée à partir de la mesure de la conductivité électrique $C_M$ dudit mélange, de sa température et de sa pression.

5. Procédé selon l'une des revendications 1 et 2, dans lequel le volume $V_r$ de liquide restant est déterminé à partir d'une courbe de référence préétablie donnant la conductivité électrique $C_M$ en fonction du volume du second liquide de mesure ajouté au volume $V_1$ connu du premier liquide de mesure.

6. Procédé selon l'une quelconque des revendications précédentes, dans lequel le mélange des premier et second liquides de mesure présents à l'intérieur de l'enveloppe rigide est homogénéisé préalablement à la mesure de sa conductivité électrique $C_M$.

7. Procédé selon la revendication 6, dans lequel l'homogénéisation du mélange des premier et second liquides de mesure présents à l'intérieur de l'enveloppe rigide est obtenue par agitation mécanique, par convection thermique, par vibration ou par recirculation.

8. Application du procédé selon l'une quelconque des revendications 1 à 7 au stockage et à l'injection sous-marine de produits chimiques.

9. Dispositif de détermination du volume de liquide restant $V_r$ à l'intérieur d'une poche souple placée à l'intérieur d'une enveloppe rigide, comprenant :

    une poche souple (2) destinée à être remplie par un volume initial $V_i$ connu d'un liquide à consommer, ladite poche souple étant munie de moyens (4) pour distribuer du liquide à consommer ;
    une enveloppe rigide (6) à l'intérieur de laquelle est placée la poche souple et qui est destinée à être initialement remplie d'un volume $V_1$ connu d'un premier liquide de mesure ayant une conductivité électrique $C_1$; et
    des moyens (8) d'admission à l'intérieur de l'enveloppe rigide d'un volume $V_A$ d'un second liquide de mesure présent à l'extérieur de l'enveloppe rigide pour compenser la perte de volume due à la distribution d'un même volume $V_A$ de liquide à consommer et maintenir l'equipression de l'ensemble, le second liquide de mesure ayant une conductivité électrique $C_2$ différente de la conductivité électrique $C_1$ du premier liquide de mesure ;

**caractérisé en ce qu'**il comprend en outre un capteur de conductivité électrique (10) positionné à l'intérieur de l'enveloppe rigide pour mesurer la conductivité électrique $C_M$ du mélange des premier et second liquides de mesure présents à l'intérieur de l'enveloppe rigide ; et des moyens de calcul pour déterminer, à partir de la mesure de la conductivité électrique $C_M$, le volume $V_A$ de liquide à consommer qui a été distribué et, à partir des volumes $V_i$ et $V_A$, le volume $V_r$ de liquide à consommer restant à l'intérieur de la poche.

10. Dispositif selon la revendication 9, dans lequel l'enveloppe rigide (6) comprend un clapet anti-retour (8) pour l'admission du volume $V_A$ du second liquide de mesure présent à l'extérieur de l'enveloppe.

11. Dispositif selon l'une des revendications 9 et 10, dans lequel l'enveloppe rigide (6') comprend une membrane souple (12) qui délimite à l'intérieur de l'enveloppe rigide la poche souple (2') destinée à être remplie par le liquide à consommer.

12. Dispositif selon l'une quelconque des revendications 9 à 11, comprenant en outre un capteur de température (14) et un capteur de pression (16) à l'intérieur de l'enveloppe rigide, et un capteur de température (18) et un capteur de pression (20) à l'extérieur de l'enveloppe rigide afin de calculer les densités respectives $\rho_1$, $\rho_2$, $\rho_M$ du premier liquide de mesure, du second liquide de mesure et du mélange des premier et second liquides de mesure présents à l'intérieur de l'enveloppe rigide.

13. Dispositif selon l'une quelconque des revendications 9 à 12, comprenant en outre des moyens d'homogénéisation du mélange des premier et second liquides de mesure présents à l'intérieur de l'enveloppe rigide.

14. Dispositif selon la revendication 13, dans lequel les moyens d'homogénéisation comprennent un agitateur mécanique, une source de chaleur pour créer une convection thermique, une source de vibration ou une pompe de recirculation du mélange.

15. Dispositif selon l'une quelconque des revendications 9 à 14, dans lequel les moyens d'admission à l'intérieur de l'enveloppe rigide du volume $V_A$ d'un second liquide de mesure comprennent une pluralité d'orifices d'admission répartis à différents endroits de l'enveloppe rigide pour faciliter l'homogénéisation du mélange.

16. Dispositif selon l'une quelconque des revendications 9 à 15, comprenant en outre une pluralité de capteurs de conductivité électrique positionnés à différents endroits à l'intérieur de l'enveloppe rigide pour vérifier l'homogénéité du mélange des premier et second liquides de mesure présents à l'intérieur de l'enveloppe rigide.

**Patentansprüche**

1. Verfahren zur Bestimmung der Flüssigkeitsrestmenge $V_r$ in einem flexiblen Beutel (2), der zunächst mit einer bekannten Menge $V_i$ einer zu verbrauchenden Flüssigkeit gefüllt ist und der mit einem Mittel zum Ablassen der zu verbrauchenden Flüssigkeit versehen ist, wobei das Verfahren umfasst:

die Platzierung des flexiblen Beutels in einer starren Hülle (6), die zunächst mit einer bekannten Menge $V_1$ einer ersten Messflüssigkeit mit einer elektrischen Leitfähigkeit $C_1$ gefüllt ist, und während des Ablassens einer Menge $V_A$ an zu verbrauchender Flüssigkeit, Einlassen, in die starre Hülle, einer gleichen Menge $V_A$ einer zweiten Messflüssigkeit, die außerhalb der starren Hülle vorhanden ist, um den Mengenverlust aufgrund des Ablassens der Menge $V_A$ an zu verbrauchender Flüssigkeit auszugleichen und den Gleichgewichtsdruck der Anordnung aufrechtzuerhalten, wobei die zweite Messflüssigkeit eine elektrische Leitfähigkeit $C_2$ aufweist, die sich von der elektrischen Leitfähigkeit $C_1$ der ersten Messflüssigkeit unterscheidet, **dadurch gekennzeichnet, dass** es ferner die Messung der elektrischen Leitfähigkeit $C_M$ des Gemischs aus der ersten und der zweiten Messflüssigkeit umfasst, das in der starren Hülle vorhanden ist, die Bestimmung der Menge $V_A$ an zu verbrauchender Flüssigkeit, die abgelassen wurde, auf Grundlage der Messung der elektrischen Leitfähigkeit $C_M$, und die Berechnung der Menge $V_r$ an zu verbrauchender Flüssigkeit, die in dem Beutel verbleibt, auf Grundlage der Mengen $V_i$ und $V_A$.

2. Verfahren nach Anspruch 1, wobei es sich bei der ersten Messflüssigkeit um Süßwasser handelt und es sich bei der zweiten Messflüssigkeit um Meerwasser handelt.

3. Verfahren nach Anspruch 2, wobei die Menge $V_A$ an zu verbrauchender Flüssigkeit, die abgelassen wurde, auf Grundlage der folgenden Gleichung bestimmt wird:

$$V_A = V_1 \times [(\rho_M - \rho_1) / (\rho_2 - \rho_M)]$$

wobei: $\rho_M$ die Dichte des Gemischs aus Meerwasser und Süßwasser ist, das in der starren Hülle vorhanden ist, $\rho_1$ die Dichte des Süßwassers ist und $\rho_2$ die Dichte des Meerwassers ist.

4.  Verfahren nach Anspruch 3, wobei die Dichte $\rho_M$ des Gemischs aus Meerwasser und Süßwasser, das in der starren Hülle vorhanden ist, auf Grundlage der Messung der elektrischen Leitfähigkeit $C_M$ des Gemischs, seiner Temperatur und seines Drucks berechnet wird.

5.  Verfahren nach einem der Ansprüche 1 und 2, wobei die Flüssigkeitsrestmenge $V_r$ auf Grundlage einer vorgegebenen Referenzkurve bestimmt wird, welche die elektrische Leitfähigkeit $C_M$ in Abhängigkeit der zu der bekannten Menge $V_1$ der ersten Messflüssigkeit hinzugefügten Menge der zweiten Messflüssigkeit angibt.

6.  Verfahren nach einem der vorhergehenden Ansprüche, wobei das Gemisch aus der ersten und der zweiten Messflüssigkeit, das in der starren Hülle vorhanden ist, vor der Messung seiner elektrischen Leitfähigkeit $C_M$ homogenisiert wird.

7.  Verfahren nach Anspruch 6, wobei die Homogenisierung des Gemischs aus der ersten und der zweiten Messflüssigkeit, das in der starren Hülle vorhanden ist, durch mechanisches Rühren, durch Wärmekonvektion, durch Vibration oder durch Umwälzung erfolgt.

8.  Anwendung des Verfahrens nach einem der Ansprüche 1 bis 7 bei der Speicherung und der Einspritzung von Chemikalien unter Wasser.

9.  Vorrichtung zur Bestimmung der Flüssigkeitsrestmenge $V_r$ in einem flexiblen Beutel, der in einer starren Hülle platziert ist, umfassend:

    einen flexiblen Beutel (2), der dazu vorgesehen ist, mit einer bekannten Ausgangsmenge $V_i$ einer zu verbrauchenden Flüssigkeit gefüllt zu werden, wobei der flexible Beutel mit einem Mittel (4) zum Ablassen der zu verbrauchenden Flüssigkeit versehen ist,
    eine starre Hülle (6), in welcher der flexible Beutel platziert ist und die dazu vorgesehen ist, zunächst mit einer bekannten Menge $V_1$ einer ersten Messflüssigkeit mit einer elektrischen Leitfähigkeit $C_1$ gefüllt zu werden, und

    ein Mittel (8) zum Einlassen, in die starre Hülle, einer Menge $V_A$ einer zweiten Messflüssigkeit, die außerhalb der starren Hülle vorhanden ist, um den Mengenverlust aufgrund des Ablassens einer gleichen Menge $V_A$ an zu verbrauchender Flüssigkeit auszugleichen und den Gleichgewichtsdruck der Anordnung aufrechtzuerhalten, wobei die zweite Messflüssigkeit eine elektrische Leitfähigkeit $C_2$ aufweist, die sich von der elektrischen Leitfähigkeit $C_1$ der ersten Messflüssigkeit unterscheidet,
    **dadurch gekennzeichnet, dass** sie ferner einen Sensor (10) für elektrische Leitfähigkeit, der in der starren Hülle positioniert ist, um die elektrische Leitfähigkeit $C_M$ des Gemischs aus der ersten und der zweiten Messflüssigkeit, das in der starren Hülle vorhanden ist, zu messen, und ein Berechnungsmittel, um, auf Grundlage der Messung der elektrischen Leitfähigkeit $C_M$, die Menge $V_A$ an zu verbrauchender Flüssigkeit, die abgelassen wurde, und, auf Grundlage der Mengen $V_i$ und $V_A$, die Menge $V_r$ an zu verbrauchender Flüssigkeit, die in dem Beutel verbleibt, zu berechnen, umfasst.

10. Vorrichtung nach Anspruch 9, wobei die starre Hülle (6) ein Rückschlagventil (8) zum Einlassen der Menge $V_A$ der zweiten Messflüssigkeit, die außerhalb der Hülle vorhanden ist, umfasst.

11. Vorrichtung nach einem der Ansprüche 9 und 10, wobei die starre Hülle (6') eine flexible Membran (12) umfasst, die in der starren Hülle den flexiblen Beutel (2') begrenzt, der dazu vorgesehen ist, mit der zu verbrauchenden Flüssigkeit gefüllt zu werden.

12. Vorrichtung nach einem der Ansprüche 9 bis 11, ferner umfassend einen Temperatursensor (14) und einen Drucksensor (16) in der starren Hülle und einen Temperatursensor (18) und einen Drucksensor (20) außerhalb der starren Hülle, um die jeweilige Dichte $\rho_1$, $\rho_2$, $\rho_M$ der ersten Messflüssigkeit, der zweiten Messflüssigkeit und des Gemischs aus der ersten und der zweiten Messflüssigkeit, die in der starren Hülle vorhanden sind, zu berechnen.

13. Vorrichtung nach einem der Ansprüche 9 bis 12, ferner umfassend ein Mittel zur Homogenisierung des Gemischs aus der ersten und der zweiten Messflüssigkeit, das in der starren Hülle vorhanden ist.

14. Vorrichtung nach Anspruch 13, wobei das Homogenisierungsmittel ein mechanisches Rührwerk, eine Wärmequelle zum Erzeugen einer Wärmekonvektion, eine Vibrationsquelle oder eine Pumpe zur Umwälzung des Gemischs umfasst.

15. Vorrichtung nach einem der Ansprüche 9 bis 14, wobei das Einlassmittel in der starren Hülle für die Menge $V_A$ einer zweiten Messflüssigkeit mehrere Einlassöffnungen umfasst, die auf verschiedene Stellen der starren Hülle verteilt sind, um die Homogenisierung des Gemischs zu erleichtern.

16. Vorrichtung nach einem der Ansprüche 9 bis 15, ferner umfassend mehrere Sensoren für elektrische Leitfähigkeit, die an verschiedenen Stellen in der starren Hülle positioniert sind, um die Homogenität des in der starren Hülle vorhandenen Gemischs aus der ersten und der zweiten Messflüssigkeit zu prüfen.

**Claims**

1. A process for determining the volume of liquid remaining $V_r$ inside a flexible pouch (2) initially filled with a known volume $V_i$ of a liquid to be consumed and provided with means for dispensing the liquid to be consumed, the process comprising:

   placing the flexible pouch inside a rigid envelope (6) initially filled with a known volume $V_1$ of a first measuring liquid having an electrical conductivity $C_1$; and
   during the dispensing of a volume $V_A$ of liquid to be consumed, admitting inside the rigid envelope the same volume $V_A$ of a second measuring liquid present outside the rigid envelope to compensate for the loss of volume due to the dispensing of the volume $V_A$ of liquid to be consumed and to maintain the pressure balance of the assembly, the second measuring liquid having an electrical conductivity $C_2$ different from the electrical conductivity $C_1$ of the first measuring liquid;
   **characterized in that** it further comprises measuring the electrical conductivity $C_M$ of the mixture of the first and second measuring liquids present inside the rigid envelope;
   determining the volume $V_A$ of liquid to be consumed that has been dispensed from the measurement of electrical conductivity $C_M$; and
   calculating the volume $V_r$ of liquid to be consumed remaining inside the pouch from the volumes $V_i$ and $V_A$.

2. The process as claimed in claim 1, wherein the first measuring liquid is freshwater and the second measuring liquid is seawater.

3. The process as claimed in claim 2, wherein the volume $V_A$ of liquid to be consumed that has been dispensed is determined from the following equation:

$$V_A = V_1 \times [(\rho_M - \rho_1)/(\rho_2 - \rho_M)]$$

where: $\rho_M$ is the density of the mixture of seawater and freshwater present inside the rigid envelope; $\rho_1$ is the density of freshwater; and $\rho_2$ is the density of seawater.

4. The process as claimed in claim 3, wherein the density $\rho_M$ of the mixture of seawater and freshwater present inside the rigid envelope is calculated from the measurement of the electrical conductivity $C_M$ of said mixture, its temperature and pressure.

5. The process as claimed in one of claims 1 and 2, wherein the volume $V_r$ of liquid remaining is determined from a pre-established reference curve giving the electrical conductivity $C_M$ as a function of the volume of the second measuring liquid added to the known volume $V_1$ of the first measuring liquid.

6. The process as claimed in any one of the preceding claims, wherein the mixture of the first and second measuring liquids present inside the rigid envelope is homogenized prior to measuring its electrical conductivity $C_M$.

7. The process as claimed in claim 6, wherein homogenization of the mixture of the first and second measuring liquids present inside the rigid envelope is achieved by mechanical agitation, by thermal convection, by vibration or by recirculation.

8. Application of the process as claimed in any one of claims 1 to 7 to the subsea storage and injection of chemicals.

9. A device for determining the volume of liquid remaining $V_r$ inside a flexible pouch placed inside a rigid envelope, comprising:

   a flexible pouch (2) intended to be filled with a known initial volume $V_i$ of a liquid to be consumed, said flexible pouch being provided with means (4) for dispensing the liquid to be consumed;
   a rigid envelope (6) inside which the flexible pouch is placed and which is intended to be initially filled with a known volume $V_1$ of a first measuring liquid having an electrical conductivity $C_1$; and
   means (8) for admitting inside the rigid envelope a volume $V_A$ of a second measuring liquid present outside the rigid envelope to compensate for the loss of volume due to the dispensing of the same volume $V_A$ of liquid to be consumed and to maintain the pressure balance of the assembly, the second measuring liquid having an

electrical conductivity $C_2$ different from the electrical conductivity $C_1$ of the first measuring liquid; **characterized in that** it further comprises an electrical conductivity sensor (10) positioned inside the rigid envelope to measure the electrical conductivity $C_M$ of the mixture of the first and second measurement liquids present inside the rigid envelope; and

calculation means to determine, from the measurement of the electrical conductivity $C_M$, the volume $V_A$ of liquid to be consumed that has been dispensed and, from the volumes $V_i$ and $V_A$, the volume $V_r$ of liquid to be consumed remaining inside the pouch.

10. The device as claimed in claim 9, wherein the rigid envelope (6) comprises a check valve (8) for the admission of the volume $V_A$ of the second measuring liquid present outside the envelope.

11. The device as claimed in one of claims 9 and 10, wherein the rigid envelope (6') comprises a flexible membrane (12) which delimits within the rigid envelope the flexible pouch (2') intended to be filled with the liquid to be consumed.

12. The device as claimed in any one of claims 9 to 11, further comprising a temperature sensor (14) and a pressure sensor (16) inside the rigid envelope, and a temperature sensor (18) and a pressure sensor (20) outside the rigid envelope in order to calculate the respective densities $\rho_1$, $\rho_2$, $\rho_M$ of the first measuring liquid, the second measuring liquid and the mixture of the first and second measuring liquids present inside the rigid envelope.

13. The device as claimed in any one of claims 9 to 12, further comprising means for homogenizing the mixture of the first and second measuring liquids present inside the rigid envelope.

14. The device as claimed in claim 13, wherein the means of homogenization comprises a mechanical agitator, a heat source for creating thermal convection, a vibration source, or a mixture recirculation pump.

15. The device as claimed in any one of claims 9 to 14, wherein the means for admitting inside the rigid envelope of the volume $V_A$ of a second measuring liquid comprises a plurality of inlet ports distributed at different locations in the rigid envelope to facilitate homogenization of the mixture.

16. The device as claimed in any one of claims 9 to 15, further comprising a plurality of electrical conductivity sensors positioned at different locations within the rigid envelope to check the homogeneity of the mixture of the first and second measuring liquids present within the rigid envelope.

FIG.1A

FIG.1B

FIG.2A

FIG.2B

**18 20**

**16 14 10**

**8**

**6**

$V_1$

**2**

$V_i$

**4**

# FIG.3

# FIG.4

S5

S2

S6

S7

S1

S3

S4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016179371 A

**Littérature non-brevet citée dans la description**

- Algorithms for computation of fundamental properties of seawater. *Unesco technical papers in marine science,* 1983, 44